# EUROPEAN PATENT APPLICATION

(11) **EP 3 617 552 A1**
(43) Date of publication of application: **04.03.2020**
(21) Application number: 17907420.8
(22) Date of filing: 28.04.2017
(51) Int. Cl.: F16H 31/00, F16H 13/04

(54) **MECHANICAL CONVERTER**

(71) Applicant: Enix Co., Ltd., Chiyoda-ku, Tokyo 100-6162 (JP)
(72) Inventor: NOIA Giampaolo Francesco, Genoa 16136 (IT)
(74) Representative: Schwöbel, Thilo K.
(86) International application number: PCT/JP2017/017000
(87) International publication number: WO 2018/198334

(57) **Abstract**

The present disclosure relates to a mechanical converter of irregular bi-directional circular motion into continuous and consistent single direction circular motion through a system of gears, drive shafts, freewheels, and flywheel. The system works by transforming the circular movement, both clockwise and counterclockwise from the input shaft into continuous rotation of an output shaft through the use of a pair of free wheels solidly connected to the input shaft which transfers the alternating motion, depending on the rotation of the input shaft, to two parallel secondary shafts.

## Description

### TECHNICAL FIELD

The present disclosure relates to a mechanical converter, and in particular to the mechanical conversion of irregular and inconstant bidirectional circular motion to continuous and consistent single direction motion to provide an efficient source of mechanical energy needed to drive a variety of devices requiring said input.

### BACKGROUND ART

Mechanical conversion of reciprocating motion into continuous motion is known and widely discussed in diverse applications. Numerous systems exist in the marketplace that enable the conversion of power produced by machines based on reciprocating moving parts such as pistons, plungers, floats and similar devices into continuous rotary motion about a central axis. The system most widely known is the rod-crank mechanism by virtue of its wide use in endothermic engines and others.

### SUMMARY

### TECHNICAL PROBLEM

However, despite the presence on the market of a multiplicity of proven solutions, such systems are often very complex to manufacture and particularly expensive in terms of materials used, resulting in a less than satisfactory price-to-value ratio. Additionally, the degree of motion, frequency and duration from these sources is often inconsistent. This leads to significant inefficiencies and adequacies in the conversion process, energy loss, and inconsistent rotational speed which taken together result in higher operational cost.

### SOLUTION TO PROBLEM

The disclosure is directed to a mechanical converter of irregular bi-directional circular motion into continuous and consistent single direction circular motion through a system of gears, drive shafts, freewheels, and flywheel. The system works by transforming the circular movement, both clockwise and counterclockwise from the input shaft into continuous rotation of an output shaft through the use of a pair of free wheels solidly connected to the input shaft which transfers the alternating motion, depending on the rotation of the input shaft, to two parallel transition drive shafts. These transition drive shafts are each fitted fixed gears. A first fixed gear of the first transition drive shaft is connected to one of the freewheel gears on the input shaft. A first fixed gear of the second transition drive shaft is connected to the other of the freewheel gears on the input shaft. The first transition drive shaft interfaces with a second fixed gear on the second transition drive shaft in order to reverse the directional movement from the second shaft. A second fixed gear of the first transition drive shaft interfaces with the output shaft. The sizes of these gears and their connecting gears are determined by the number of revolutions needed to drive the intended output device such as an energy dynamo, i.e., generator. A flywheel of sufficient mass is installed on the output shaft to ensure smooth and continuous rotation. The disclosure provides consistent, constant, and controlled rotational speed.

### EFFECTS

Through appropriate transmission components such as fixed and ratcheted gears, pulleys, belts, chains, toothed bars, ropes, and other technical equivalents, the input shaft of this disclosure may be connected to and conveniently used to transfer and transform irregular and inconsistent alternating directional motion from other mechanical sources of energy obtained from input sources such as pistons, floats. Similarly, the output shaft of the disclosure can be connected to a wide variety of apparatuses such as electric generators, compressors, turbines and any other device requiring a rotating axial motion at a constant speed. The conversion system described in this disclosure is easy to produce, sturdy, and easy to maintain and minimal loss of energy through the conversion process.

### BRIEF DESCRIPTION OF DRAWINGS

Fig. 1 shows a block diagram of the converter with the identification of the main functions; and
Fig. 2 shows an embodiment of the converter and identifies the structure, general components and functional connection.

### DESCRIPTION OF EMBODIMENTS

Referring to the drawings a description will be given of the embodiments of the present disclosure.

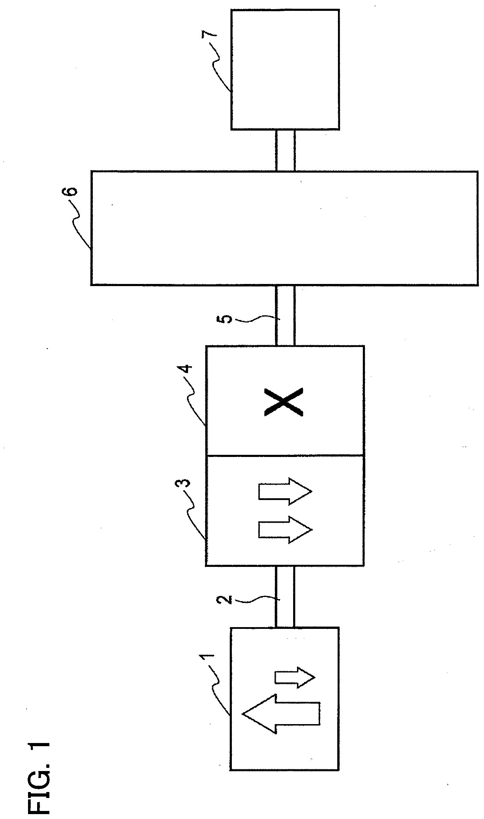

Referring to Fig. 1, components are identified schematically as the building blocks of the system.

Block 1 represents a generic source of reciprocating, possibly asymmetric rotary motion which provides the irregular, inconsistent uncontrolled mechanical energy to Input Shaft 2. This shaft transfers the incoming clockwise and counter-clockwise motion to the Push-Pull conversion block 3 which converts the incoming clockwise and counter-clockwise motion into a unidirectional rotary motion. Revolution Multiplier 4 adjusts the number of revolutions of the Input Shaft 2 with the engine speed desired on Output Shaft 5. Flywheel 6, integrated with the Output Shaft 5 has sufficient dimensions and mass to mitigate the asymmetry of parameters such as speed and torque of the clockwise and counterclockwise motions applied to the Input Shaft 2. Generic User device 7 may be connected to Output Shaft 5 to exploit the unidirectional and continuous rotary motion.

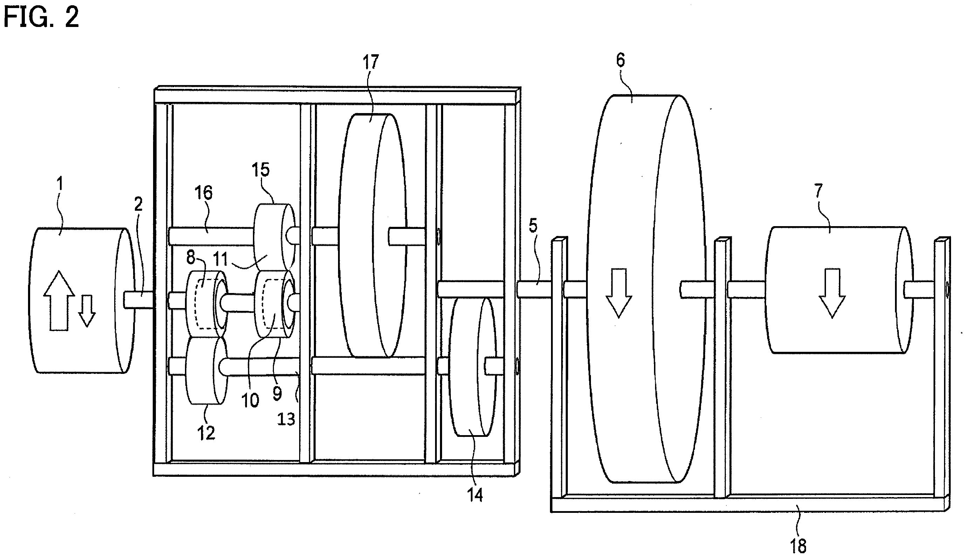

Referring to Fig. 2, details of the components within the present disclosure are described.

As shown in Fig.2, the conversion of the bi-directional, irregular, inconsistent uncontrolled mechanical energy to unidirectional and continuous rotary motion is accomplished through a series of bearings, sets of shafts, fixed gears, freewheels, and various components. A detailed description is provided about the components and their relationship to others within the present disclosure.

Block 1 representing source of reciprocating, irregular, inconsistent uncontrolled mechanical energy is integrated with the input shaft 2 that moves in the clockwise and counterclockwise by the mechanical energy source. Attached to input shaft 2 are two internal freewheel gears with pawls 8, 9 which are paired with two external and concentric gears 10, 11. The internal and external gear arrangement along with their pawls are commonly referred to as freewheel or ratchet. Their purpose is to engage and transfer power only in one direction of rotation while the other rotates freely when not engaged. The pairs 8, 10 and 9, 11 engage and transfer the power alternately depending on whether the input shaft 2 turns clockwise or counterclockwise.

When the input shaft 2 rotates in a clockwise direction, it activates the freewheel formed by the pair of internal and external freewheel gears 8 and 10 and the power is transferred to the lower transition gear 12 on lower transition shaft 13 which rotates counterclockwise with lower large-diameter transition gear 14 and transfers power to the output shaft 5, rotating it clockwise.

Similarly, if input shaft 2 rotates counter-clockwise, a pair of internal and external freewheel gears 9 and 11 transfer its power to the upper transition gear 15 which rotates clockwise together with its upper transition shaft 16 and the upper large-diameter transition gear 17. This rotation provides a counterclockwise rotation to the lower transition shaft 13 through which the lower large-diameter transition gear 14 transfers power to the output shaft 5 again causing it to rotate clockwise.

The size of the lower large-diameter transition gear 14 and the size and mass of the flywheel 6 are determined by the amount of speed and torque required by the user device 7.

During the counterclockwise and clockwise rotations of the input shaft 2, the freewheel whose rotation is inactive does not hinder operation of the system since the relative external freewheel gears 10 or 11 rotate freely in the opposite direction to the internal freewheel gears 8 or 9. Resistance or drag caused by the shaft and gears during free motion of their respective lower and upper transition shafts 13 and 16 only occur for half of the movement of the lower transition gear 12 and the upper transition gear 15.

Converter enclosure 3 is filled with machine oil and fitted with bearings for all shafts that come in contact with braces to reduce friction and wear and increase operational efficiency and lifespan. It is to be noted that the converter enclosure 3 shown in Fig. 2 may accommodate the push-pull conversion block 3 and the revolution multiplier 4 as explained referring to Fig. 1.

Frame 18 provides a sturdy structure to which flywheel 6 and the user device 7 are mounted. Bearings are provided on the frame 18 to support the output shaft 5.

In conclusion both clockwise and counterclockwise movements applied to the input shaft 2 contribute to the output motion. As a result of the conversion process and their propensity to rotate in the same direction of output shaft 5, rotating flywheel 6 move continuously and smoothly, enabling output shaft 5 to provide single direction axial power to user device 7.

### INDUSTRIAL APPLICABILITY

The present disclosure may be realized by technically equivalent configuration using devices or materials suitable for the purpose and scope that conform to the size of the constituent parts and can vary in a manner appropriate but consistent with the proposed solution.

The proposed solution is applicable to systems of power conversion from a source of alternating motion, where appropriate; asymmetric and variable intensity, to a continuous rotary motion and homogeneous regardless of scale factors and the range of powers involved.

The configuration shown in Fig.2 is just one example of how the present disclosure may be configured. Other variations in components and configurations included within the scope of the present disclosure include, but are not limited to, support structure, such as supporting walls, bearings, source of input power, such as rods, shafts and gears, geometry of the components, and directions of rotation consistent with the principle of operation.

Transmission components, such as gears, belts, chains, toothed bars, ropes, and other technical equivalents that drive input shaft 2 may be used along with other components such as pistons, floats, and similar plungers with alternating motion can be converted into a continuous motion. Similarly, output shaft 5 can be linked to a variety of user equipment such as generators, compressors, turbines, and other devices requiring continuous axial rotational mechanical energy.

### LIST OF REFERENCE SYMBOLS

- 1: Block representing a reciprocating mechanical energy source
- 2: Input shaft
- 3: Push-pull conversion block or converter enclosure
- 4: Revolution multiplier
- 5: Output shaft
- 6: Flywheel
- 7: User device
- 8, 10: Internal freewheel gear
- 9, 11: External freewheel gear
- 12: Lower transition gear
- 13: Lower transition shaft
- 14: Lower large-diameter transition gear
- 15: Upper transition gear
- 16: Upper transition shaft
- 17: Upper large-diameter transition gear
- 18: Frame

## Claims

1. A mechanical converter, comprising:
an input shaft rotating in two directions opposite to each other;
an output shaft rotating in a single direction; and
a transition mechanism mechanically coupling the input shaft with the output shaft,
wherein the transition mechanism comprises:
first and second freewheels disposed axially offset with each other on the input shaft;
first and second transition shafts each having a transition gear engaged with each freewheel;
a first gear mechanism disposed between the first transition shaft and the second transition shaft; and
a second gear mechanism disposed between the first transition shaft and the output shaft,
wherein a rotation of one of the two directions is transferred from the input shaft to the first transition shaft and from the first transition shaft to the output shaft, and a rotation of the other is transferred from the input shaft to the second transition shaft, from the second transition shaft to the first transition shaft and from the first transition shaft to the output shaft.

2. The convertor of claim 1 wherein each freewheel comprises an internal wheel gear and an external wheel gear engaged via a ratchet mechanism with the internal wheel gear.

3. The converter of claim 1 or 2 wherein rotational movements of the two directions are different in torque.

4. The converter of any one of claims 1 to 3 wherein the output shaft continuously rotates in the single direction.

5. The converter of claim 3 wherein the output shaft is provided with an element for mitigating a torque difference of the rotational movements of the two directions.

6. The converter of claim 5 wherein the element includes a flywheel.

7. The converter of any one of claims 1 to 6 wherein a gear included in the second gear mechanism is configured to be larger than the transition gear in diameter.

8. The converter of claim 7 wherein a gear included in the first gear mechanism is configured to be larger than the gear of the second gear mechanism in diameter.

9. A mechanical converter of alternate rotational mode into continuous mode, useful to transform two ways rotations also with different torque in a input shaft into a continuous one way rotation output shaft with constant torque, comprising an input shaft that supports two freewheels with opposite activation directions,
wherein two respective transition gears transfer alternatively their rotations to two transition drive shafts according to the rotation of the input shaft, the two transition drive shafts are connected with each other through a transition gear, and one of the transition gear shafts is connected through an additional gear to an output shaft that always rotates in the same direction.

10. The converter of claim 9 wherein the output drive shaft is connected to a spinning flywheel used to mitigate the possible asymmetry of the clockwise and anti-clockwise torque applied to the input shaft in order to guarantee, according with the ratio of the used gears, a transfer of power to the output shaft when different torques are applied to the input shaft.

11. The converter of claim 9 wherein the additional gear is an output drive gear connected to the output shaft that facilitates the adaptation of the revolutions of the input shaft into the revolutions needed in a user device connected to the output shaft.

12. The converter of claim 9 wherein one of the two freewheels is activated according to a rotation of the input shaft whereas the other of the two freewheels that is not activated freely rotates on the input shaft.

13. The converter of claim 10 wherein the other of the two freewheels that is not activated is rotated by the spinning flywheel.
